(19) Europäisches Patentamt
European Patent Office
Office européen des brevets

(11) Veröffentlichungsnummer: **0 250 969 B1**

(12) # EUROPÄISCHE PATENTSCHRIFT

(45) Veröffentlichungstag der Patentschrift: **20.03.91**

(51) Int. Cl.5: **C08J 9/02**, C08L 75/04, C08G 18/61, C08G 18/08

(21) Anmeldenummer: **87108445.5**

(22) Anmeldetag: **11.06.87**

Die Akte enthält technische Angaben, die nach dem Eingang der Anmeldung eingereicht wurden und die nicht in dieser Patentschrift enthalten sind.

(54) **Verfahren zur Herstellung von zelligen Polyurethanelastomeren.**

(30) Priorität: **24.06.86 DE 3621040**

(43) Veröffentlichungstag der Anmeldung:
**07.01.88 Patentblatt 88/01**

(45) Bekanntmachung des Hinweises auf die Patenterteilung:
**20.03.91 Patentblatt 91/12**

(84) Benannte Vertragsstaaten:
**BE CH DE FR GB IT LI NL SE**

(56) Entgegenhaltungen:
**EP-A- 0 036 994**
**CH-A- 476 063**
**FR-A- 2 273 832**
**GB-A- 1 044 629**
**GB-A- 1 056 066**

(73) Patentinhaber: **BAYER AG**
**W-5090 Leverkusen 1 Bayerwerk(DE)**

(72) Erfinder: **Haas, Peter, Dr.**
**Zwengenberger Strasse 43**
**W-5657 Haan 1(DE)**
Erfinder: **Ruprecht, Hans-Dieter, Dr.**
**Pfarrer-Maybaum-Weg 27**
**W-5000 Köln 80(DE)**
Erfinder: **Henrichs, Paul Theo, Dipl.-Ing.**
**Gierather Wald 43**
**W-5060 Bergisch Gladbach 2(DE)**

**EP 0 250 969 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es wird ein Verfahren zur Herstellung von zelligen Polyurethanelastomeren beschrieben, wobei durch Mitverwendung wäßriger Polysiloxan-Ionomerer in der Wasser-Vernetzerkomponente wasserdichte, zellige Elastomere, welche vorzugsweise als Puffer- oder Feder-Elemente dienen können, erhalten werden.

Formkörper aus zelligen Polyurethan-Elastomeren werden technisch in an sich bekannter Weise aus Polyisocyanaten, höhermolekularen Polyhydroxylverbindungen, Wasser als Kettenverlängerungs- sowie Treibmitteln und gegebenenfalls zusätzlichen Kettenverlängerern aufgebaut. Von den Polyurethan-Schaumstoffen unterscheiden sich zellige Polyurethan-Elastomere durch wesentlich höhere Raumgewichte (ca. 300 bis 800 $kg/m^3$), bessere physikalische Eigenschaften und die dadurch bedingten technischen Anwendungsmöglichkeiten. Besonders hochwertige zellige Polyurethan-Elastomere, wie beispielsweise ein aus 1,5-Naphthylendiisocyanat, einem linearen Glykol-Polyadipat (Molmasse ca. 2000) und Wasser hergestelltes Produkt, werden großtechnisch u.a. als Federungselemente, Puffer und Dämpfungsmaterial eingesetzt.

Ein großes Anwendungsgebiet besteht in der Kraftfahrzeugindustrie, wo derartige Werkstoffe in erster Linie als Federn und Anschlagpuffer eingesetzt werden. Insbesondere bei Federbeinkonstruktionen in Kraftfahrzeugen ist es vorteilhaft, die bislang aus Gummi hergestellten Zusatzfedern durch solche aus zelligen Polyurethan-Elastomeren zu ersetzen, da sich diese von elastischen Kompaktmaterialien durch eine wesentlich höhere Verformbarkeit unterscheiden. Verformungen bis zu 80 % sind in der Praxis durchaus üblich, insbesondere beim Schwingungsdämpfer von Automobilen.

Die aus zelligen Polyurethan-Elastomeren hergestellten Federungselemente werden bei Automobilen innerhalb der Gesamtfederbeinkonstruktion, bestehend aus Stoßdämpfer, Spiralfeder und der Elastomerfeder, auf die Kolbenstange des Stoßdämpfers geschoben. Bei dieser Art der Anordnung besteht nun die Gefahr des Eindringens von Wasser, darin gelösten Stoffen und Schmutzteilchen in die mehr oder weniger offene Porenstruktur des Elastomerkörpers. Neben Temperatureffekten, besonders in Gefrierpunktnähe, werden hierdurch Korrosions- und Abrieberscheinungen bewirkt. Die Wasserdichtigkeit solcher Körper ist für ihre Langzeittauglichkeit von großer Bedeutung.

In der DE-A 30 29 272/EP-B 36 994 konnte nun gezeigt werden, daß durch Siloxane, bzw. Siloxan-Urethan-Harnstoffe die Wasseraufnahme merklich reduziert werden kann.

Hierbei wird in der Regel so verfahren, daß der Siloxananteil der Prepolymerstufe zugegeben wird, während auf der (wasserhaltigen) Vernetzerseite zusätzlich ein Emulgator verwendet werden muß, der für eine intensive Dispergierung des Wassers in dem hydrophoben Prepolymer sorgt.

Als Emulgator gebräuchlich sind die Salze von Fettsäuren, von höhermolekularen Sulfonaten oder sulfonierten Fettsäureestern, z.B. solche von Rizinusöl.

Diese Verbindungen alleine reichen jedoch zur Unterbindung der Wasseraufnahme in die vorhandene Zellstruktur des Elastomers bei weitem nicht aus. Durch die Kombination mit den oben erwähnten Siloxanen wird zwar die Wasseraufnahme deutlich reduziert, jedoch ist eine weitere Verminderung unter Berücksichtigung der Erfahrungen bei der Anwendung in der Automobilindustrie wünschenswert.

Nachteilig bei dem bekannten Verfahren ist auch der Umstand, daß der empfindlichen NCO-Prepolymerseite eine weitere Komponente zugefügt werden muß.

Überraschend wurde nun gefunden, daß man durch ionische Gruppen enthaltende Siloxane (Siloxan-Ionomere), die nicht dem NCO-Prepolymer, sondern der Wasser-Vernetzer-Komponente bei der Herstellung der Elastomeren zugesetzt werden können, die Wasseraufnahme der zelligen Elastomeren bei Wechselbelastungen stark reduzieren kann.

Bei den Siloxanen handelt es sich um Siloxangruppen enthaltende Ionomere, welche hergestellt werden durch Umsetzung von

A) gegenüber Isocyanaten mindestens 2 reaktive Gruppen aufweisenden Polysiloxanen der allgemeinen Formel

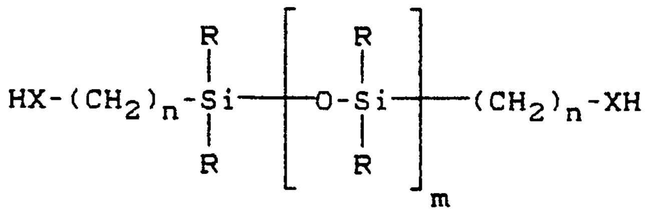

in welcher

die Reste R gleich oder verschieden sein können und für $C_1$ - bis $C_5$-Alkyl, $C_6$- bis $C_{15}$-Aryl oder Siloxylreste, vorzugsweise jedoch für Methyl-und/oder Phenylreste stehen;

n eine ganze Zahl zwischen 1 und 10, bevorzugt zwischen 1 und 3, darstellt ;

X für Sauerstoff oder $NR^1$ steht,

$R^1$ Wasserstoff oder einen $C_1$- bis $C_6$-Alkyl oder $C_6$- bis $C_{15}$-Arylrest darstellt und

m eine ganze Zahl zwischen 1 und 500, bevorzugt zwischen 1 und 250 bedeutet,

mit

B) organischen (aliphatischen, cycloaliphatischen, aromatischen oder heterocyclischen) Polyisocyanaten, vorzugsweise der Formel

$Q(NCO)_n$

in der n 2 bis 4, bevorzugt 2 und

Q bevorzugt einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen,

bedeutet, insbesondere jedoch mit aliphatischen und/oder cycloaliphatischen Di- und/oder Polyisocyanaten umsetzt, wobei das Äquivalentverhältnis der reaktiven XH-Gruppen des Siloxans zu Isocyanatgruppen bei 1:1,05 bis 1:2 liegt.

Die aus A) und B) in üblicher Weise erhaltenen NCO-Prepolymeren werden als solche oder in Lösemitteln, bevorzugt polaren, inerten Lösemitteln mit

C) wäßrigen oder alkoholischen, wäßrigen Lösungen von niedermolekularen Verbindungen mit einer (oder zwei), gegenüber NCO reaktiven Gruppe, vorzugsweise einer primären oder sekundären, (cyclo)-aliphatisch gebundenen Aminogruppe und mindestens einer Salzgruppe oder salzbildenden Gruppe, vorzugsweise Carboxylgruppe, einer Gruppe der Säuren des Schwefels oder des Phosphors, z.B. Sulfonsäure- oder Sulfinsäure, Phosphorsäure- oder Phosphorigsäure-Gruppe oder ihren Salzen, bevorzugt Alkalisalzen oder Erdalkalisalzen,

in etwa äquivalenten Mengen umgesetzt und gegebenenfalls die salzbildende Gruppe in ihre Salze übergeführt.

Die resultierenden, ionische Gruppen enthaltenden Polysiloxane werden dann von den inerten Lösungsmitteln befreit und in Wasser gelöst oder dispergiert.

Zum Aufbau solcher ionische Gruppen enthaltender Siloxane werden als reaktive Polysiloxane A) mit mindestens zwei, gegenüber NCO-Gruppen reaktiven Gruppen beispielsweise verwendet:

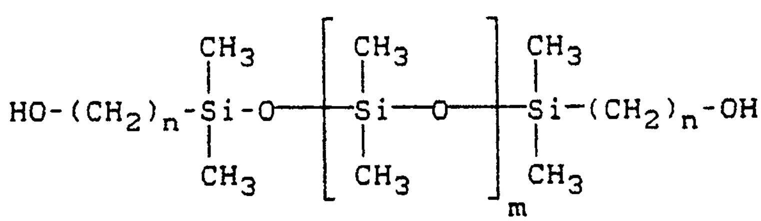

m = 1 bis 250

n = 1 bis 10

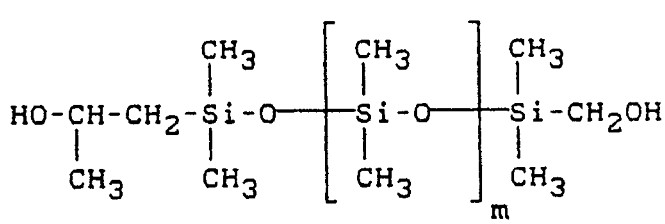

m = 1 bis 250

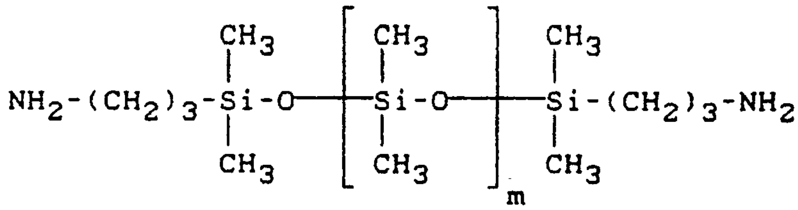

m = 1 bis 250

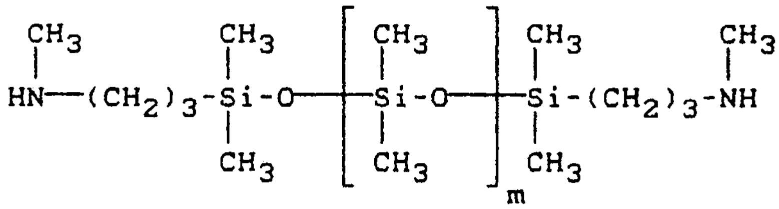

m = 1 bis 250

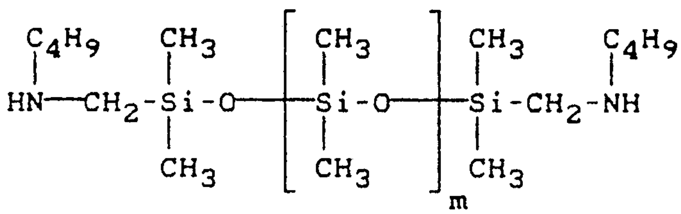

m = 1 bis 250

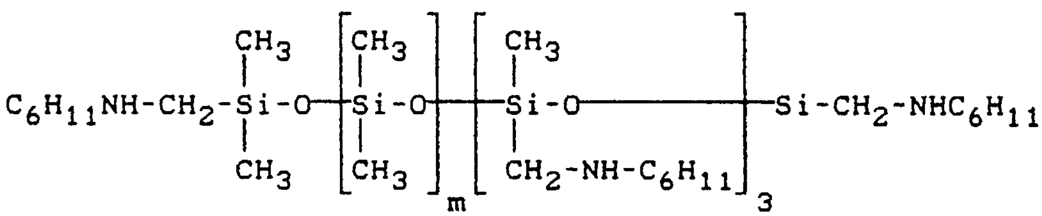

m = 1 bis 250

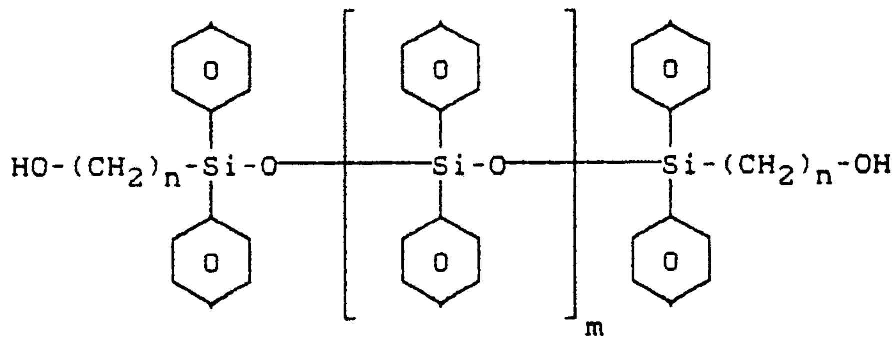

m = 1 bis 250

n = 1 bis 10

bevorzugt

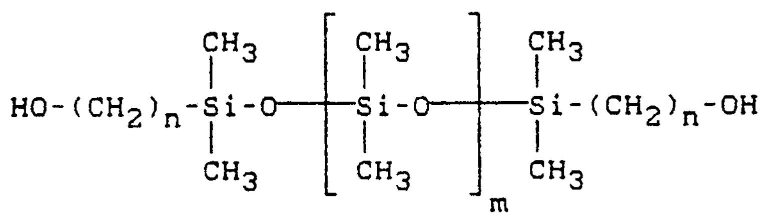

m = 1 bis 250

n = 1 bis 6.

B) Als organische Polyisocyanate werden Polyisocyanate wie aliphatische Diisocyanate, 1,4-Tetramethylendiisocyanat, 1,6-Hexamethylendiisocyanat, 1,12-Dodecandiisocyanat, sowie cycloaliphatische Diisocyanate, in beliebigen Mischungen ihrer Stereoisomeren, z.B. Cyclobutan-1,3-diisocyanat, Cyclohexan-1,3- und -1,4-diisocyanat, 1-Isocyanato-3,3,5-trimethyl-5-isocyanatomethyl-cyclohexan (Isophorondiisocyanat), 2,4- und 2,6-Hexahydrotoluylendiisocyanat, Hexahydro-1,3- und/oder -1,4-phenylendiisocyanat, Perhydro-2,4'- und/oder -4,4'-diphenylmethandiisocyanat bevorzugt eingesetzt. Aromatische Diisocyanate sind weniger bevorzugt, z.B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, einschließlich seiner Alkyl- und Chlorsubstituierten Derivate und Naphthylen-1,5-diisocyanat.
Weitere Polyisocyanate sind beispielsweise in der DE-A 30 29 272 als Polyisocyanate zur Herstellung von Elastomeren aufgeführt.

Ferner ist es möglich, beliebige Mischungen der vorgenannten Polyisocyanate zu verwenden. Bevorzugt sind (cyclo)aliphatische, bifunktionelle Isocyanate.

Die resultierenden NCO-Prepolymeren auf Basis der reaktiven Siloxane werden bevorzugt in inerten Lösemitteln weiter verarbeitet, und zwar mit Salzen, bevorzugt als wäßrige Lösungen, z.B.

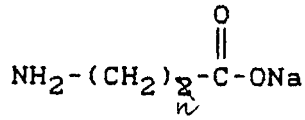

(n = 1 bis 10, z.B. 1, 2, 3, 5 oder 10)

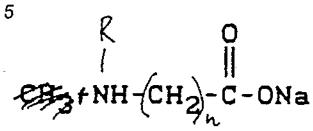

(n = 1 bis 6, z.B. 1; R = $C_1$- bis $C_6$-Alkyl, z.B. Methyl)

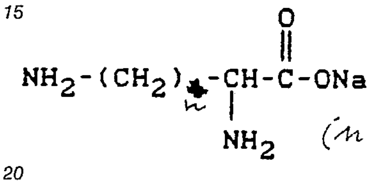

(n = 2 bis 10, z.B. 4)

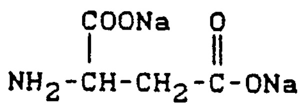

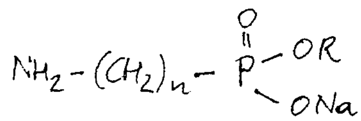

(n = 2 bis 10; R = $C_1$- bis $C_6$-Alkyl)

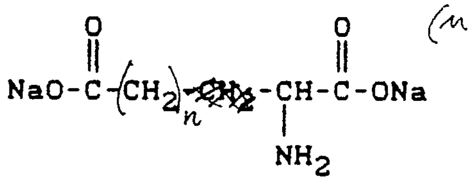

(n = 0 bis 8, z.B. 2)

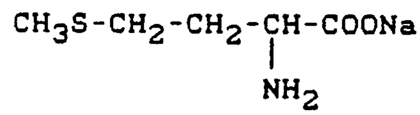

$H_2N-(CH_2)_n-SO_3Na$ (n = 1 bis 10, z.B. 2)

$CH_3NH-CH_2-CH_2-SO_3Na$

$H_2N-(CH_2)_n-NH-(CH_2)_n-SO_3Na$ (n = 2 bis 6, z.B. 2)

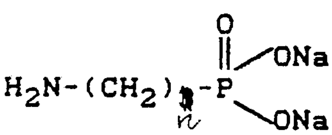

(n = 2 bis 10, z.B. 3)

Für das Umsetzungsverhältnis ist Äquivalenz bevorzugt. Nach der Umsetzung wird das inerte Lösungsmittel abdestilliert und Wasser zugesetzt, so daß die durch ionische Gruppen modifizierten Siloxanverbindungen in wäßriger Lösung oder Dispersion vorliegen und so für die Herstellung der zelligen Polyurethanelastomeren verwendet werden können. Es kann auch zuerst das Wasser zugesetzt und dann das Lösungsmittel abdestilliert werden.

Zur Umsetzung mit den reaktiven Polysiloxanen werden organische Polyisocyanate, vorzugsweise der allgemeinen Formel

$Q(NCO)_{n'}$

in der n' 2 bis 4, bevorzugt 2 und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen,

bedeutet, insbesondere aliphatische oder cycloaliphatische Polyisocyanate, vorzugsweise Diisocyanate, verwendet.

Die Verwendung der urethan- und/oder harnstoffgruppenhaltigen Polysiloxan-Ionomeren zur Herstellung von zelligen Polyurethanelastomeren erfolgt als direkter Bestandteil der Wasser-Vernetzerkomponente bei der Umsetzung mit der üblicherweise bevorzugten NCO-Prepolymerkomponente. Die Polysiloxan-Ionomeren werden dabei als wäßrige Lösung oder Dispersion eingesetzt. Aus technischen Gründen werden sie dabei vorzugsweise mit kleineren Mengen an höhermolekularen Polyolen, vorzugsweise den bereits zur Herstellung der NCO-Prepolymeren benutzten Polyolen, besonders in Mengen der Polyole von 5 bis 20 Gew.-% der insgesamt zur Herstellung der Polyurethane verwendeten Polyole, vermischt, um eine günstigere Dosierfähigkeit der Wasser-Vernetzerkomponente zu erreichen.

Gegenstand der Erfindung sind somit Verfahren zur Herstellung von wasserdichten, feinzelligen Polyurethanelastomeren mit einer Dichte von 300 bis 800 kg/m$^3$ durch gegebenenfalls stufenweise Umsetzung von

α) organischen Polyisocyanaten,

β) Polyhydroxylverbindungen mit einem Molekulargewicht von 400 bis 8000,

(α + β bevorzugt in Form von NCO-Propolymeren),

γ) Wasser, sowie gegebenenfalls

δ) organischen Kettenverlängerungsmitteln mit mindestens 2 gegenüber Isocyanaten reaktionsfähigen Wasserstoffatomen und einem Molekulargewicht von 32 bis 399, sowie

ε) Katalysatoren und/oder bekannten Hilfs- und Zusatzmitteln,

wobei das Äquivalentverhältnis zwischen Isocyanatgruppen und gegenüber NCO reaktiven Gruppen in der Gesamtrezeptur zwischen 0,90:1 und 1,20:1 liegt, die dadurch gekennzeichnet sind, daß man der Wasser-Vernetzerkomponente Polysiloxan-Ionomere der oben definierten Struktur in Mengen von 0,1 bis 5 Gew.-%, bezogen auf die gesamte Reaktionsmischung, zufügt.

Die NCO-Prepolymeren zur Herstellung der zelligen Polyurethanelastomeren mit Dichten von vorzugsweise 300 bis 800 kg/m$^3$ entsprechen dabei üblichen Zusammensetzungen und Ausgangsstoffen, wie sie ausführlich beispielsweise in der DE-A 29 20 502 oder in der DE-A 30 29 272 angeführt sind.

Die NCO-Prepolymeren werden auf der Basis von höhermolekularen Polyhydroxylverbindungen β), die vorzugsweise durchschnittlich 2 bis 3, vorzugsweise etwa 2, gegenüber NCO reaktive Gruppen, insbesondere Hydroxylgruppen aufweisen und ein Molekulargewicht von etwa 400 bis 8000, vorzugsweise 800 bis 6000, aufweisen, aufgebaut, z.B. auf der Basis von Polyestern, Polyethern, Polythioethern, Polyacetalen, Polycarbonaten, Polyesteramiden, wie sie für die Herstellung von homogenen und zellförmigen Polyurethanen an sich bekannt sind.

Derartige Verbindungen werden z.B. in den DE-A 2 550 796, 2 550 797, 2 624 527, 2 638 759, 2 302 564 (US-A 3 963 679), 2 402 840 (US-A 3 984 607), 2 457 387 (US-A 4 035 213), 2 829 670, 2 830 949 und 2 830 953 ausführlich beschrieben. Erfindungsgemäß bevorzugt sind Polyester auf Basis von Adipinsäure und aliphatischen Diolen oder Diolmischungen, z.B. Ethylenglykol, Butandiol-1,4, Hexandiol-1,6 oder Neopentylglykol, doch sind auch Polyether auf Basis von Polyoxytetramethylendiolen gut geeignet, ebenso wie Polycaprolactone und Polycarbonate, als auch (weniger bevorzugt) Polypropylenglykole.

Als Polyisocyanate α) kommen alle für die Herstellung von PU-Elastomeren bekannten Polyisocyanate oder ihre Mischungen in Betracht. Bevorzugt sind jedoch aromatische Diisocyanate geeignet, z.B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, Diphenylethan-4,4'-diisocyanat, einschließlich ihrer Alkyl- und Chlorsubstituierten Derivate und besonders Naphthylen-1,5-diisocyanat oder 3,3'-Dimethyl-diphenyl-4,4'-diisocyanat, oder N,N'-Bis-(4-methyl-3-isocyanatophenyl)-harnstoff oder auch Cyclohexan-1,4-diisocyanat. Besonders bevorzugt ist das Naphthylen-1,5-diisocyanat.

Vorzugsweise wird bei der Herstellung der zelligen Polyurethanelastomer-Formkörper nach dem bekannten Präpolymerverfahren gearbeitet, d.h. es wird aus dem höhermolekularen Polyol und dem Diisocyanat in einem NCO/OH-Äquivalentverhältnis von 1,5:1 bis 4:1, vorzugsweise 1,8:1 bis 3,0:1 ein Isocyanatgruppen aufweisendes Präpolymer hergestellt, welches anschließend mit der genannten Wassermenge zur Umsetzung gelangt. Ein Arbeiten nach dem bekannten "one shot"-Verfahren ist möglich, jedoch keinesfalls bevorzugt. Im Falle der Mitverwendung organischer Kettenverlängerungsmittel kommen diese in den bei der Herstellung von Polyurethanelastomeren üblichen Mengen oder in nur geringen modifizierten Mengen, wie für die aromatischen Diamine beschrieben, zum Einsatz.

Das NCO-Prepolymer weist dabei üblicherweise einen NCO-Gehalt von 1,8 bis 8,9 %, vorzugsweise von 2,8 bis 6,4 % auf.

Die gegebenenfalls mit zu verwendenden Komponenten δ sind Hydroxyl gruppen und/oder Aminogruppen und/oder Thiolgruppen und/oder Carboxylgruppen aufweisende Verbindungen, vorzugsweise Hydroxylgruppen aufweisende Verbindungen, wie sie als Kettenverlängerungsmittel oder Vernetzungsmittel bekannt sind und in den obengenannten Druckschriften beschrieben werden. Diese Verbindungen weisen in der Regel 2 bis 4 gegenüber Isocyanaten reaktionsfähige Wasserstoffatome auf, vorzugsweise 2 oder 3 reaktionsfähige Wasserstoffatome.

Beispielhaft seien für hydroxylgruppenhaltige Verbindungen Ethylenglykol, Propylenglykol, Trimethylenglykol, Butandiol-1,4 und -2,3, Hexandiol-1,6, Neopentylglykol, Diethylenglykol, Dipropylenglykol, Diethanolamin, Triethanolamin, Dipropanolamin und N-Methyl-diethanolamin genannt. Weitere Polyole mit einem Molgewicht zwischen vorzugsweise 62 bis 250 können mitverwendet werden.

Besonders vorteilhafte Ergebnisse zur Herstellung von zelligen Polyurethanelastomeren werden dann erzielt, wenn man entsprechend der DE-A 29 20 502 im Reaktionsansatz aus höhermolekularen Polyolen, überschüssigen Polyisocyanaten und gegebenenfalls weiteren niedermolekularen Kettenverlängerungsmitteln neben Wasser untergeordnete Mengen, bezogen auf den NCO-Gehalt der NCO-Präpolymeren bzw. der Reaktionsmischung, aromatischer Diamine mitverwendet. Als aromatische Diamine werden dabei solche mit einem Molekulargewicht von 108 bis 399, vorzugsweise von 108 bis 250, verwendet. Insbesondere wirkt sich ein Zusatz von 0,1 bis 0,8 Gew.-%, vorzugsweise 0,15 bis 0,5 Gew.-% an aromatischen Diaminen im gesamten Reaktionsansatz sehr günstig auf eine gleichmäßige Zellstruktur und eine verbesserte Wärmestandfestigkeit aus.

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-phenylendiamine (DE-Offenlegungsschriften 2 001 772, 2 025 896 und 2 065 869), 3,3'-Dichlor-4,4'-diamino-diphenylmethan, 2,4- und/oder 2,6-Toluylendiamin und durch 1 oder 2 $C_1$-$C_3$-Alkylgruppen substituiertes Toluylendiamin, z.B. 3,5-Diethyl-2,4-bzw. -2,6-diaminotoluol, 4,4'-Diaminodiphenylmethan und 2,4'-Diaminodiphenylmethan und deren mit 1 bis 4 $C_1$-$C_4$-Alkylgruppen substituierte Derivate, z.B. 3,3'-Dimethyl-4,4'-diaminodiphenylmethan, 3,3,5,5'-Tetraethyl-4,4'-diaminodiphenylmethan, 3,3',5,5'-Tetraethyl-2,2'-dichlor-4,4'-diaminodiphenylmethan, 3,3'-Diisopropyl-4,4'-diaminodiphenylmethan, deren mit 1 bis 4 Chlorgruppen substituierte Derivate, 4,4'-Diaminodiphenyldisulfide (DE-Offenlegungsschrift 2 404 976), Diaminodiphenyldithioether (DE-Offenlegungsschrift 2 509 404) sowie durch Alkylthiogruppen substituierte aromatische Diamine (DE-Offenlegungsschrift 2 638 760) genannt. Als Diamine werden bevorzugt solche eingesetzt, welche in ihrer Struktur analog dem angewandten Diisocyanat sind: So werden Toluylendiamin und substituierte Toluylendiamine bevorzugt für die Umsetzung mit 2,4- und 2,6-Toluylendiisocyanat angewandt, während Vorpolymere auf Basis von 4,4'-Diisocyanatodiphenylmethan bevorzugt mit - gegebenenfalls substituierten - Diaminodiphenylmethanen umgesetzt werden. Naphthylen-1,5-diisocyanat wird vorteilhaft mit 1,5-Diaminonaphthalin kombiniert, aber auch die Kombination von 1,5-Diaminonaphthalin mit 4,4'-Diisocyanatodiphenylmethan ergibt wertvolle Produkte. Überraschend ist, daß schon sehr kleine Mengen des Diamins, bevorzugt 0,15 bis 0,5 Gew.-%, bezogen auf Gesamtpolyurethan, im Sinne der vorliegenden Erfindung wirken.

Bevorzugt werden 4,4'-Diaminodiphenylmethan und seine Methyl- und Chlor-Substitutionsprodukte, gegebenenfalls in Mischung mit 2,4'-Diamino-diphenylmethan und die 2,4-und/oder 2,6-Toluylendiamine und insbesondere 1,5-Diaminonaphthalin.

Ganz besonders bevorzugt ist die Kombination 1,5-Naphthylendiisocyanat/1,5-Diamino-naphthalin. Das diprimäre Diamin kann dem Reaktionsansatz am zweckmäßigsten in Form einer Lösung in der im 2. Verfahrensschritt verwendeten Teilmenge der höhermolekularen Polyhydroxylverbindung und der erfindungsgemäß zu verwendenden Polysiloxan-Ionomer-Lösung zugesetzt werden. Es ist dabei verfahrenstechnisch vorteilhaft, diese Diaminlösung in einem getrennten Verfahrensschritt mit einer kleinen Menge des verwendeten aromatischen Diisocyanats zu versetzen, wobei das molare Verhältnis Diamin:Diisocyanat zwischen 2:1 und 10:9 liegen soll und infolge der praktisch selektiven Reaktion zwischen NCO-und $NH_2$-Gruppen im Polyol in situ Aminharnstoffe der allgemeinen Formel

$$NH_2\text{-}Q'\text{-}NH\text{-}[CO\text{-}NH\text{-}Q\text{-}NH\text{-}CO\text{-}NH\text{-}Q'\text{-}NH]_nH$$

in einer Menge von etwa 0,2 bis 1 Gew.-%, bezogen auf Polyurethan, gebildet werden, in welcher

n eine ganze Zahl zwischen 1 und 11 bedeutet,

Q den Rest darstellt, welcher durch Entfernung der NCO-Gruppen aus dem Diisocyanat entsteht und

Q' für den Rest steht, welcher bei der Entfernung der Aminogruppen aus dem Diamin entsteht.

Beim erfindungsgemäßen Verfahren wird Wasser sowohl als Kettenverlängerungsmittel als auch als Treibmittel eingesetzt. Neben Wasser können die beispielhaft genannten Kettenverlängerungsmittel jedoch mitverwendet werden. Das Wasser wird im allgemeinen in einer Menge von 0,3 bis 2,1 Gew.-%, bezogen auf Gesamtgemisch aller anderen Reaktionspartner, vorzugsweise in einer Menge von 0,5 bis 1,5 Gew.-%, eingesetzt. Vorzugsweise gelangt das Wasser in Form einer wäßrigen Lösung des erfindungsgemäßen Polysiloxan-lonomers zum Einsatz. Hierdurch wird eine innige Durchmischung (Emulgatorwirkung) des Wassers mit den übrigen Reaktionsteilnehmern gewährleistet und gleichzeitig der Hydrophobiereffekt im zelligen Elastomer erzielt.

Die Herstellung der Polyurethanelastomeren erfolgt im übrigen vorzugsweise unter Verwendung solcher Mengen der einzelnen Reatkionspartner, daß eine Isocyanatkennzahl von 100 bis 115 vorliegt. Dies gilt sowohl für die bevorzugte Umsetzung von NCO-Präpolymeren mit Wasser als auch für die Mengenverhältnisse der einzelnen Reaktionspartner beim erfindungsgemäß weniger bevorzugten "one shot"-Verfahren.

Die Menge des in die Form einzutragenden Reaktionsgemischs wird so bemessen, daß das obengenannte Raumgewicht von 300 bis 800 $kg/m^3$ resultiert. Zur Einstellung dieses Rohdichtebereichs von 300 bis 800 $kg/m^3$ wird bei vorgegebenem Formvolumen die entsprechende Masse an Rohstoffgemisch, bestehend aus den Komponenten $\alpha$ bis $\epsilon$, in die Form eingetragen. Zur Herstellung der Reaktionsgemische und zum Befüllen der Form kann man sich maschineller Einrichtungen bedienen, z.B. solcher, die in der US-A 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl Hanser Verlag, München 1966, z.B. auf den Seiten 121 bis 205 beschrieben.

Als Formmaterial kommt Metall, z.B. Aluminium, oder Kunststoff, z.B. Epoxidharz, in Frage. In der Form schäumt das schäumfähige Reaktionsgemisch auf und bildet den Formkörper.

Die Wirkung dieser Polysiloxan-lonomeren in Elastomeren mit Zellstruktur kann insofern als überraschend angesehen werden, als bei Verwendung dieser Produkte als Zellstabilisator in elastischen Polyesterurethanschaumstoffen, wie z.B. bei einem weich elastischen Polyesterschaumstoff gemäß Becker Braun, Kunststoff-Handbuch, Band 7, Carl-Hanser-Verlag München 1983, S. 194, auf der Basis eines leicht verzweigten Polyesterpolyols der OH-Zahl 60 aus Adipinsäure, Diethylenglykol und Trimethylolpropan, die Bildung eines schaumfähigen Gemisches völlig unterbunden wird. Vielmehr resultiert eine spröde Masse mit grober Zellstruktur und minimaler Höhe.

## Beispiele

I) Herstellung der ionische Gruppen aufweisenden Polysiloxan-lonomere

NCO - Prepolymer a)

Zu 444 g Isophorondiisocyanat werden 570 g $\alpha,\omega$-Hydroxymethyl-poly-dimethylsiloxan des OH-Gehaltes von 6 % gegeben und bei einem NCO-Gehalt von 8,3 % mit 500 g trockenem Aceton versetzt.

### Beispiel 1

Das Prepolymer a) wird mit einer Lösung aus 194 g des Natriumsalzes der Aminoessigsäure in 194 g Wasser versetzt, wobei die Temperatur auf 52 °C ansteigt; nach einer Stunde ist kein Isocyanat mehr nachweisbar. Völliges Einengen ergibt ein farbloses Harz, das mit 1014 g Wasser zu einer 50 %igen Lösung mit opakem Aussehen verdünnt wird.

### Beispiel 2

Das Prepolymer a) wird mit einer Lösung aus 306 g des Natriumsalzes der 6-Aminocapronsäure in 306 g Wasser versetzt; nach ca. 1 Stunde ist in der trüben Dispersion kein Isocyanat mehr nachweisbar. Es wird mit 1014 g Wasser versetzt und Aceton abdestilliert. Es resultiert eine 50 %ige Dispersion des Polysiloxanharnstoffcarboxylates.

Beispiel 3

Das Prepolymer a) wird mit einer Lösung aus 382 g des Dinatriumsalzes der Glutaminsäure und 382 g Wasser versetzt; nach ca. 2 Stunden ist kein Isocyanat mehr nachweisbar; es werden 1014 g Wasser zugefügt und Aceton abdestilliert, wobei eine 50 %ige Dispersion des Polysiloxanharnstoffcarboxylates entsteht.

Beispiel 4

Das Prepolymer a) wird mit einer Lösung aus 250 g des Natriumsalzes der 2-Aminoethansulfonsäure und 250 g Wasser versetzt; nach ca. 1 Stunde ist kein Isocyanat mehr nachweisbar; es werden 1014 g Wasser zugesetzt und Aceton abdestilliert; man erhält eine 50 %ige Dispersion des Polysiloxanharnstoffsulfonates.

NCO-Prepolymer b)

In 666 g Isophorondiisocyanat werden 2280 g $\alpha,\omega$-Dihydroxymethyl-poly-dimethylsiloxan des OH-Gehaltes von 3 % gegeben und bei einem NCO-Gehalt von 2,85 % mit 2950 g trockenem Aceton versetzt.

Beispiel 5

Die Prepolymerlösung von b) wird mit einer Lösung von 194 g des Natriumsalzes der Aminoessigsäure in 194 g Wasser versetzt; nach 2 Stunden ist kein Isocyanat mehr nachweisbar; es werden 2946 g Wasser nachgesetzt und eine 50 %ige Dispersion des Polysiloxanharnstoffcarboxylates erhalten, nachdem Aceton abdestilliert wurde.

Beispiel 6

Die Prepolymerlösung von b) wird mit einer Lösung von 354 g des Dinatriumsalzes der Aminobernsteinsäure in 354 g Wasser versetzt; nach ca. 1 Stunde in kein Isccyanat mehr nachweisbar, es werden 2946 g Wasser nachgesetzt und durch Abdestillieren von Aceton auf eine 50 %ige Dispersion des Polysiloxanharnstoffcarboxylates eingestellt.

II) Herstellung der Elastomerformteile mit Zellstruktur

Beispiel 7 (Vergleichsbeispiel)

Zu 90 Teilen eines entwässerten Butandiol/Ethandiol-(1:1)-Adipinsäure-Mischpolyesters der OH-Zahl 56 werden bei 130° C 24 Teile 1,5-Naphthylendiisocyanat gegeben, 15 Minuten lang verrührt, bis ein NCO-Gehalt von ca. 5 % erreicht ist. Dann kühlt man das entstandene NCO-Prepolymer auf 90° C ab.

Es wird als Vernetzerkomponente ein Gemisch aus 10 Teilen des auf 50° C erwärmten Mischpolyesters der auch für das NCO-Prepolymer verwendeten Zusammensetzung, und 2,15 Teile einer 50 %igen wäßrigen Lösung eines Natriumsalzes von sulfoniertem Ricinusöl als Emulgator hergestellt.

Sowohl die NCO-Prepolymerkomponente als auch die wäßrige Vernetzerkomponente werden getrennt zum Ausschäumen der Form maschinell über Gießmaschinen mit Zahnradpumpen und Rührwerksmischkopf dosiert und in die (Puffer)-Form bei einer Formtemperatur von 80° C eingetragen. Nach ca. 30 Minuten wird entformt und die Formteile werden 12 Stunden bei 110° C ausgeheizt; ihre Rohdichte beträgt 470 kg/m$^3$, (Pufferhöhe 155,5 mm, Puffergewicht 100,0 g).

Prüfverfahren der Federelemente:

Der Elastomerkörper wird unter Wasser auf 65 % seiner Ausgangslänge komprimiert, in diesem Zustand 1 Stunde belassen, dann unter Wasser entlastet und 30 Stunden im Wasser gelagert, entnommen, kurz abgetupft und gewogen.

Die Rücktrocknung wird bei 50 °C bis zur Gewichtskonstanz durchgeführt; Dauer ca. 1 Woche.

Dynamische Belastung:

Es wird um 65 % der Ausgangshöhe mit einer Frequenz von 2 Hz bei insgesamt 400.000 Lastwechseln verformt. Danach wird die Wasseraufnahme erneut bestimmt:

Wasseraufnahme (Mittelwert aus 8 Messungen) für (Vergleichs) Beispiel 7 X = 94 g

Wasseraufname nach dynamischer Prüfung für (Vergleichs)-Beispiel 7 (Mittelwert) = 99,9 g

Beispiel 8 (erfindungsgemäß)

Vorbemerkung:

Während die in DE-A 30 29 272 aufgeführten Polysiloxane bzw. Polysiloxanurethane und Polysiloxanharnstoffe bereits zu einer beträchtlichen Reduzierung der Wasseraufnahme in den Elastomeren führten, mußten diese Produkte jedoch der empfindlichen NCO-Prepolymerstufe zugesetzt werden, was u.a. die Lagerstabilität bzw. die Reaktivität der NCO-Prepolymerstufe negativ beeinflussen kann.

Gegenüber den früheren Labor-Testbedingungen (wie in DE-A 30 29 272 angewendet), welche durch Praxiserfahrungen vielfach nicht voll bestätigt werden konnten, wurden nunmehr die Prüfbedingungen hinsichtlich Zeit und Deformationsbedingungen erheblich verschärft, um eine gute Korrelation zum Praxis-Langzeitverhalten der Prüfkörper zu bekommen.

Die erfindungsgemäß zu verwendenden Polysiloxan-Carboxylate sowie die entsprechenden -Sulfonate und -Phosphonate werden der Wasser-Vernetzerkomponente zugesetzt und lassen demnach die Prepolymerseite während ihrer Synthese und ihrer Lagerzeit unbeeinflußt.

Durchführung:

Es wird wie unter Beispiel 7 verfahren, jedoch wird statt des Emulgators aus dem Natriumsalz des sulfonierten Ricinusöls die 50 %ige wäßrige Siloxan-Ionomer-Lösung des Beispiels 1 mit 10 Teilen des Mischpolyesters, wie im NCO-Prepolymer a) vermischt und als Wasser-Vernetzerkomponente dosiert.

Pufferhöhe: 155,5 mm; Puffergewicht: 100,0 g

Wasseraufnahme (Mittelwert aus 8 Messungen) = 6,6 g
Wasseraufnahme nach dynamischer Prüfung = 16,1 g.
Roh-Dichte : 470 kg/$m^3$

Beispiel 9 (erfindungsgemäß)

Es wird wie unter Beispiel 7 verfahren, jedoch wird statt des Emulgators aus dem Natriumsalz der sulfonierten Ricinolsäure die 50 %ige wäßrige Lösung des Beispiels 3 vermischt, mit 10 Teilen des Polyesterpolyols als Wasser-Vernetzerkomponente zudosiert.

Pufferhöhe: 155.5 mm; Puffergewicht: 100 g

Wasseraufnahme (Mittelwert aus 8 Messungen) = 6,6 g
Wasseraufnahme nach dynamischer Prüfung = 18,2 g.
Roh-Dichte 470 kg/$m^3$

Beispiel 10 (erfindungsgemäß)

Es wird wie unter Beispiel 7 verfahren, jedoch wird statt des Emulgators aus dem Natriumsalz der sulfonierten Ricinolsäure die 50 %ige wäßrige Lösung des Beispiels 5, vermischt mit 10 Teilen des Polyesterpolyols, als Wasser-Vernetzerkomponente zudosiert.

Pufferhöhe: 155,5 mm; Puffergewicht: 100 g
Roh-Dichte: 470 kg/$m^3$

Wasseraufnahme (Mittelwert aus 8 Messungen) = 6,0 g
Wasseraufnahme nach dynamischer Prüfung = 17,7 g.

Die erfindungsgemäß zu verwendenden Polysiloxan-Ionomere wirken bei der Umsetzung zu zelligen Elastomeren

- emulgierend,
- stabilisierend auf die Zellstruktur und
- reduzieren die Wasseraufnahme in den Formteilen in überraschend hoher Weise.

Die ausgesprochen niedrige Wasseraufnahme bleibt auch nach dynamischer Belastung auf niedrigem Niveau, d.h. die Zellstruktur wird durch den Belastungsvorgang nicht wesentlich verändert und bleibt hochgradig geschlossen, ohne das hervorragende Dämpfungsverhalten einzubüßen.

## Ansprüche

1. Verfahren zur Herstellung von wasserdichten, feinzelligen Polyurethanelastomeren mit einer Dichte van 300 bis 800 kg/$m^3$ durch gegebenenfalls stufenweise Umsetzung von
   α) organischen Polyisocyanaten,
   β) Polyhydroxylverbindungen mit einem Molekulargewicht von 400 bis 8000,
   γ) Wasser, sowie gegebenenfalls
   δ) organischen Kettenverlängerungsmitteln mit mindestens 2, gegenüber Isocyanaten reaktionsfähigen Wasserstoffatomen und einem Molekulargewicht von 32 bis 399 sowie
   ε) Katalysatoren und/oder bekannten Hilfs- und Zusatzmitteln,
   wobei das Äquivalentverhältnis zwischen Isocyanatgruppen und gegenüber NCO reaktiven Verbindungen in der Gesamtrezeptur zwischen 0,90:1 und 1,20:1 liegt, dadurch gekennzeichnet, daß man der Wasser-Vernetzerkomponente Polysiloxan-Ionomere in Mengen von 0,1 bis 5-Gew.-%, bezogen auf die gesamte Reaktionsmasse, zufügt, wobei man als Polysiloxan-Ionomere Verbindungen einsetzt, die man durch Umsetzung von NCO-Prepolymeren aus
   A) gegenüber Polyisocyanaten reaktiven Polysiloxanen der allgemeinen Formel

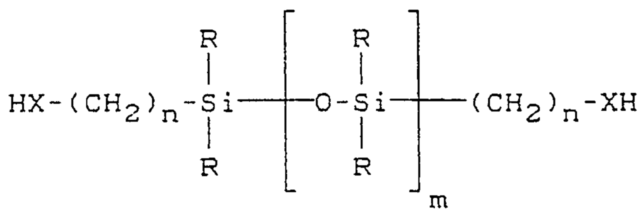

   in welcher

| | |
|---|---|
| die Reste R | gleich oder verschieden sein können und für $C_1$ - bis $C_5$-Alkyl, $C_6$- bis $C_{15}$-Aryl oder Siloxylreste, vorzugsweise jedoch für Methyl-und/oder Phenylreste stehen; |
| n | eine ganze Zahl zwischen 1 und 10 darstellt, |
| m | eine ganze Zahl zwischen 1 und 500 bedeutet, |
| X | für Sauerstoff oder $NR^1$ steht und |
| $R^1$ | Wasserstoff oder einen $C_1$- bis $C_6$-Alkyl-oder $C_6$- bis $C_{15}$-Arylrest darstellt und |

   B) organischen Polyisocyanaten in Äquivalentverhältnissen XH zu NCO von 1:1,05 bis 1:2 mit
   C) wäßrigen oder wäßrig-alkoholischen Lösungen niedermolekularer Verbindungen mit einer oder zwei, gegenüber NCO reaktiven Gruppen und mindestens einer Salzgruppe oder salzbildenden Gruppe in etwa äquivalenten Mengen und gegebenenfalls auschließende Überführung der salzbildenden Gruppe in ihre Salze erhalten hat.

2. Verfahren nach Anspruch 1, dadurch gekennzeichnet, daß die Polysilcxan-Ionomeren mit einem Teil der höhermolekularen Polyhydroxylverbindungen, und gegebenenfalls 0,1 bis 0,8 Gew.-% an aromatischen

Diaminen, in wäßriger Lösung oder Dispersionen als Wasser-Komponente dosiert mit den NCO-PrePolymeren vermischt werden.

3. Verfahren nach Anspruch 1 oder 2, dadurch gekennzeichnet, daß als niedermolekulare Verbindungen C) bei der Herstellung der Polysiloxan-Ionomere verwendet werden:

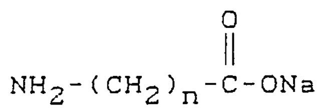

$n = 1$ bis 10

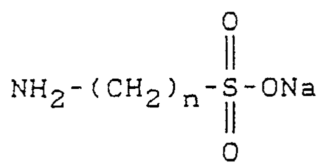

$n = 1$ bis 10

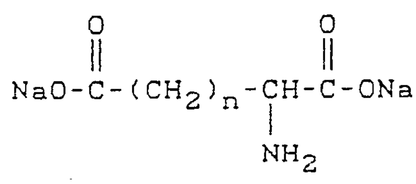

$n = 0$ bis 8

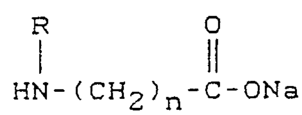

$n = 1$ bis 6
$R = C_1$- bis $C_6$-Alkyl

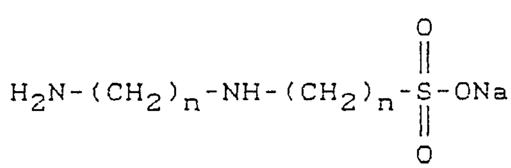

$n = 2$ bis 6

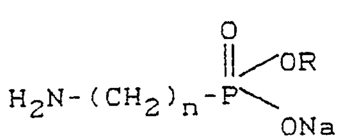

$n = 2$ bis 10
$R = C_1$- bis $C_6$-Alkyl

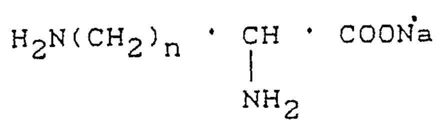

$n = 2$ bis 10.

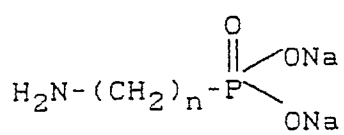

$n = 2$ bis 10

4. Verfahren nach Anspruch 1 oder 2, dadurch gekennzeichnet, daß bei der Herstellung der Polysiloxan-Ionomeren als Komponente A) folgende Verbindungen eingesetzt werden:

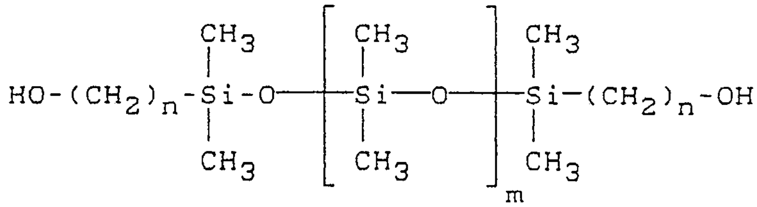

m = 1 bis 250

n = 1 bis 10

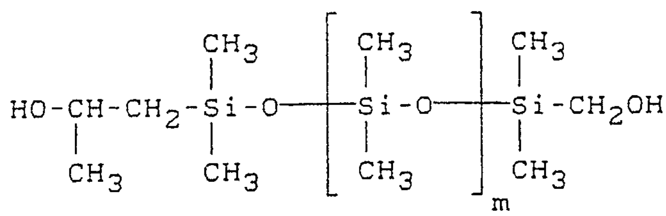

m = 1 bis 250

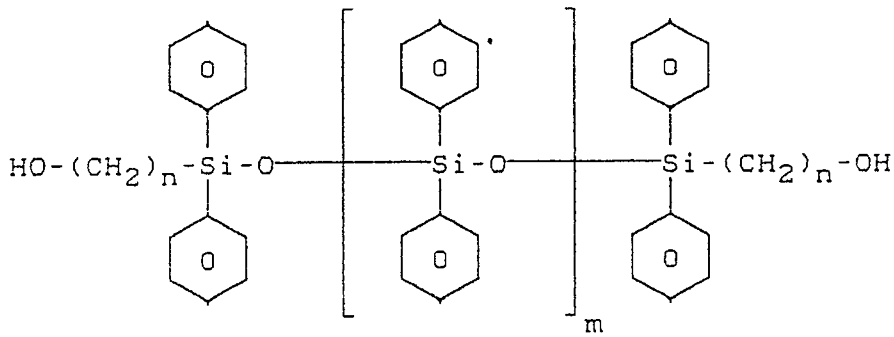

m = 1 bis 250

n = 1 bis 10

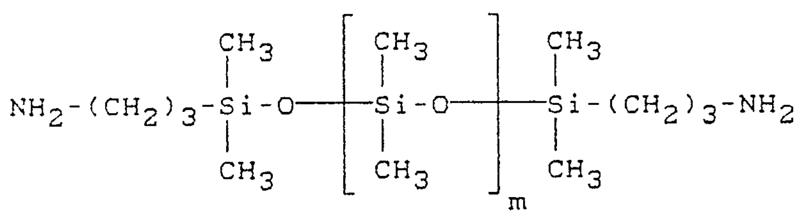

m = 1 bis 250

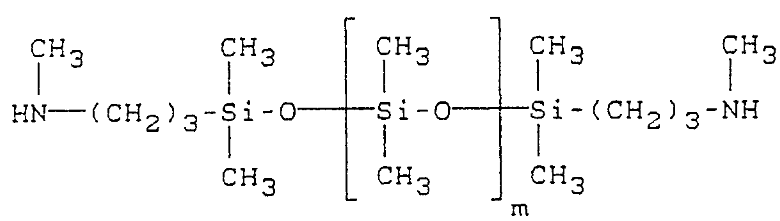

m = 1 bis 250

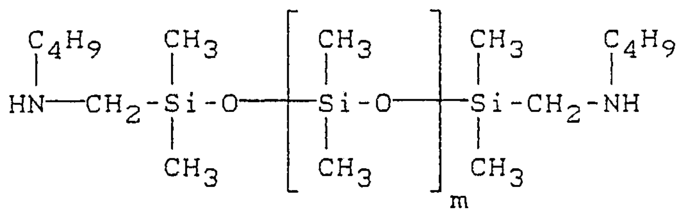

m = 1 bis 250

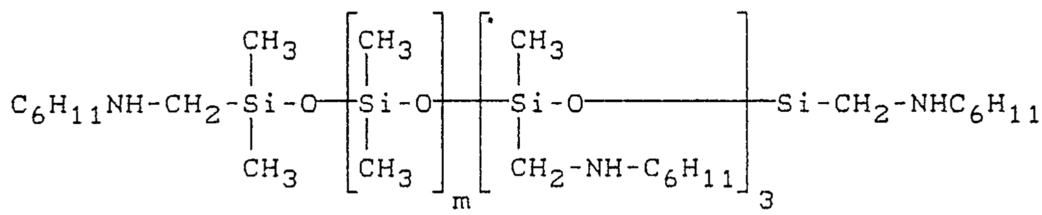

m = 1 bis 250

5. Verfahren nach **einem der Ansprüche 1 bis 4, dadurch gekennzeichnet,** daß man als organische Kettenverlängerungsmittel aromatische Diamine mit einem Molekulargewicht von 108 bis 399 in einer Menge von 0,1 bis 0,8 Gew.-%, bezogen auf die Gesamtmischung, verwendet werden.

6. Verfahren nach **einem der Ansprüche 1 bis 5, dadurch gekennzeichnet,** daß als Komponente α) 1,5-Naphthylendiisocyanat, 4,4'-Diphenylmethandiisocyanat, 4,4'-Diphenylethandiisocyanat, 1,4-Phenylendiisocyanat, 1,4-Cyclohexandiisocyanat und/oder 3,3'-Dimethyl-4,4'-diisocyanato-biphenyl verwendet wird.

7. Verfahren nach einem der Ansprüche 1 bis 6, dadurch gekennzeichnet, daß als Komponente β) Polyesterpolyole, Polypropylenglykole, Polyoxytetramethylenetherdiole, Polycaprolactondiole und/oder Polycarbonatdiole verwendet werden.

## Claims

1. A process for the production of waterproof, fine-cell polyurethane elastomers having a density of 300 to 800 kg/m³ by reaction - optionally in steps - of
   α) organic polyisocyanates,
   β) polyhydroxyl compounds having a molecular weight of 400 to 8,000,
   γ) water and, optionally,
   δ) organic chain-extending agents containing at least two isocyanate-reactive hydrogen atoms and having a molecular weight of 32 to 399 and
   ϵ) catalysts and/or known auxiliaries and additives,
   the equivalent ratio of isocyanate groups to NCO-reactive groups in the formulation as a whole being from 0.90:1 to 1.20:1, characterized in that polysiloxane ionomers are added to the water-crosslinker component in quantities of 0.1 to 5% by weight, based on the reaction mixture as a whole, the polysiloxane ionomers used being compounds which have been obtained by reaction of NCO prepolymers of
   A) Polyisocyanate-reactive.polysiloxanes corresponding to the following general formula

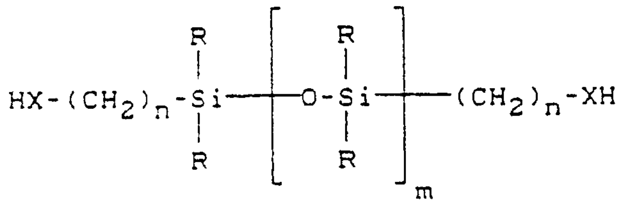

in which

- the R's — may be the same or different and represent $C_{1-5}$ alkyl, $C_{6-15}$ aryl or siloxyl groups, but preferably methyl and/or phenyl groups;
- n — is an integer of 1 to 10,
- m — is an integer of 1 to 500,
- x — represents oxygen or $NR^1$ and
- $R^1$ — is hydrogen or a $C_{1-6}$ alkyl or $C_{6-15}$ aryl radical

and

B) organic polyisocyanates in equivalent ratios of XH to NCO of 1:1.5 to 1:2 with

C) aqueous or aqueous alcoholic solutions of low molecular weight compounds containing one or two NCO-reactive groups and at least one salt group or salt-forming group in substantially equivalent quantities and, optionally, subsequent conversion of the salt-forming group into its salts.

**2.** A process as claimed in claim 1, characterized in that the polysiloxane ionomers are mixed with the NCO prepolymers together with part of the relatively high molecular weight polyhydroxyl compounds and, optionally, 0.1 to 0.8% by weight aromatic diamines introduced in aqueous solution or dispersion as the water component.

**3.** A process as claimed in claim 1 or 2, characterized in that the following compounds are used as the low molecular weight compounds C) in the production of the polysiloxane ionomers:

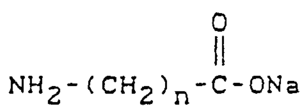

n = 1 to 10

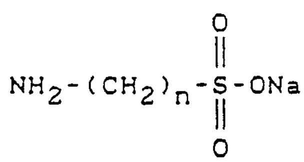

n = 1 to 10

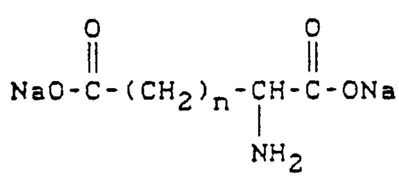

n = 0 to 8

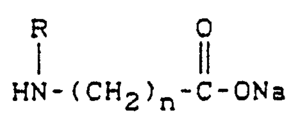

n = 1 to 6
R = $C_1$- to $C_6$-Alkyl

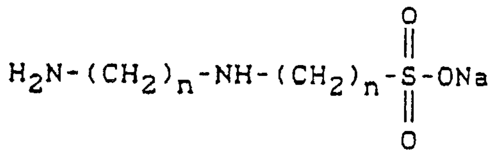

n = 2 to 6

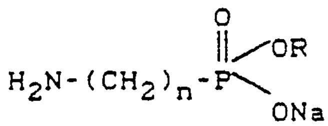

n = 2 to 10
R = $C_1$- to $C_6$-Alkyl

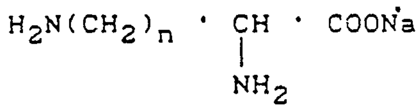

n = 2 to 10.

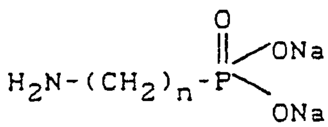

n = 2 to 10

4. A process as claimed in claim 1 or 2, characterized in that the following compounds are used as component A) in the production of the polysiloxane ionomers:

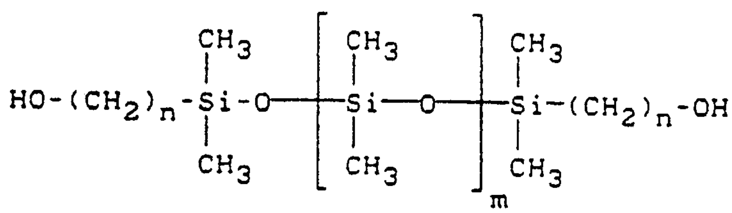

m = 1 to 250

n = 1 to 10

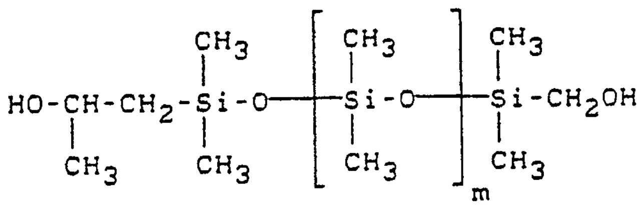

m = 1 to 250

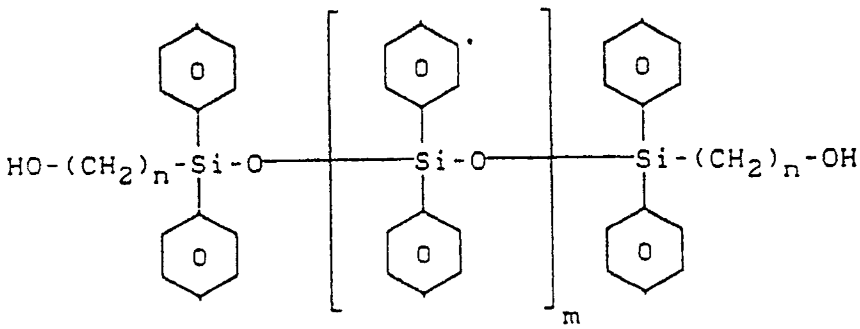

m = 1 to 250

n = 1 to 10

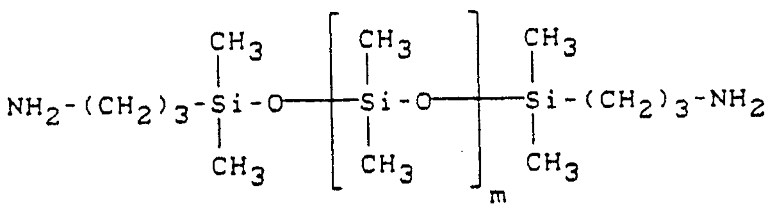

m = 1 to 250

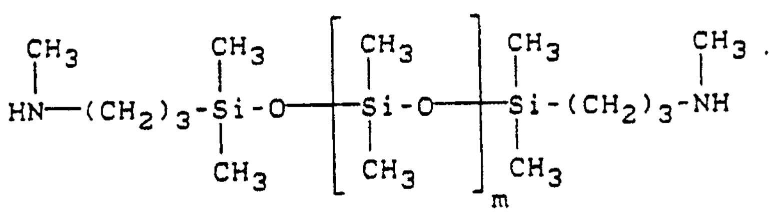

m = 1 to 250

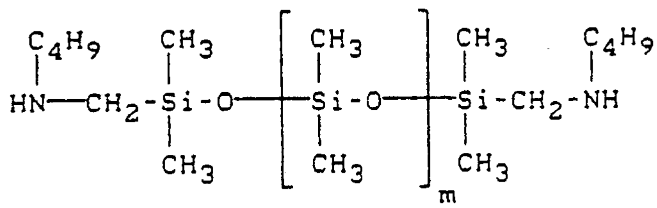

m = 1 to 250

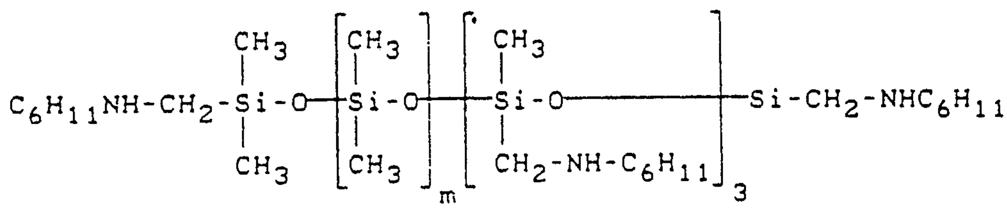

m = 1 to 250

5. A process as claimed in any of claims 1 to 4, characterized in that aromatic diamines having a molecular weight of 108 to 399 are used as the organic chain-extending agent in a quantity of 0.1 to 0.8% by weight, based on the mixture as a whole.

6. A process as claimed in any of claims 1 to 5, characterized in that 1,5-naphthylene diisocyanate, 4,4'-diphenyl methane diisocyanate, 4,4'-diphenylethane diisocyanate, 1,4-phenylene diisocyanate, 1,4-cyclohexane diisocyanate and/or 3,3'-dimethyl-4,4'-diisocyanatobiphenyl is used as component α).

7. A process as claimed in any of claims 1 to 6, characterized in that polyester polyols, polypropylene glycols, polyoxytetramethylene ether diols, polycaprolactone diols and/or polycarbonate diols are used as component β).

**Revendications**

1. Procédé de préparation d'élastomères de polyuréthannes alvéolaires étanches à l'eau à une densité de 300 à 800 kg/m³ par réaction, éventuellement en plusieurs stades opératoires, de
   α) des polyisocyanates organiques,
   β) des composés polyhydroxylés de poids moléculaire 400 à 8 000,
   γ) de l'eau et le cas échéant
   δ) des agents organiques d'allongement des chaînes contenant au moins deux atomes d'hydrogène réactifs avec les isocyanates et ayant un poids moléculaire de 32 à 399, et
   ε) des catalyseurs et/ou des produits auxiliaires et additifs connus,
   avec un rapport de 0,90 : 1 à 1,20 : 1 entre les équivalents de groupes isocyanates et les équivalents de composés réactifs à l'égard des groupes NCO dans le mélange total, caractérisé en ce que l'on ajoute au composant eau-réticulant des ionomères de polysiloxanes en quantité de 0,1 à 5 % du poids de la masse de réaction totale, et on utilise en tant qu'ionomères de polysiloxanes des composés qui ont été obtenus par réaction de prépolymères à groupes NCO de

A) des polysiloxanes réactifs avec les polyisocyanates et répondant à la formule générale

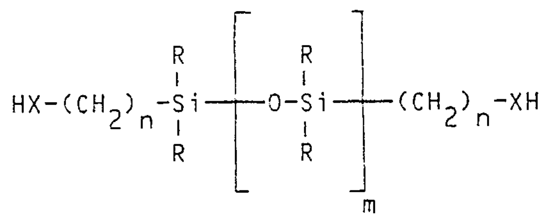

dans laquelle
les symboles R, qui peuvent avoir des significations identiques ou différentes, représentent chacun un groupe alkyle en $C_1$ -$C_5$ aryle en $C_6$-$C_{15}$ ou siloxyle, mais de préférence un groupe méthyle ou phényle,
n est un nombre entier allant de 1 à 10,
m est un nombre entier allant de 1 à 500,
X représente l'oxygène ou le groupe $NR^1$ et
$R^1$ représente l'hydrogène ou un groupe alkyle en $C_1$ -$C_6$ ou aryle en $C_6$-$C_{15}$ et

B) des polyisocyanates organiques, avec un rapport de 1 : 1,05 à 1 : 2 entre les équivalents de groupes XH et les équivalents de groupes NCO, avec

C) des solutions aqueuses ou hydroalcooliques de composés à bas poids moléculaire contenant un ou deux groupes réactifs avec les groupes NCO et au moins un groupe salin ou salifiable, en quantités à peu près équivalentes, après quoi, le cas échéant, on a converti les groupes salifiables en sels.

**2.** Procédé selon la revendication 1, caractérisé en ce que les ionomères de polysiloxanes sont introduits en tant que composant aqueux et mélangés avec les prépolymères à groupes NCO, avec une partie des composés polyhydroxylés à haut poids moléculaire et, le cas échéant, 0,1 à 0,8 % en poids de diamines aromatiques, en solution ou dispersion aqueuse.

**3.** Procédé selon la revendication 1 ou 2, caractérisé en ce que l'on utilise en tant que composés à bas poids moléculaire C) à la préparation des ionomères de polysiloxanes les composés suivants :

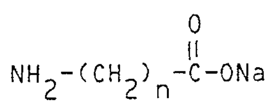

n = 1 à 10

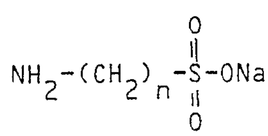

n = 1 à 10

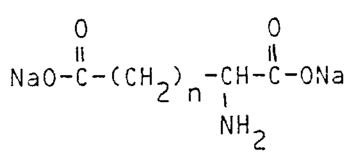

n = 0 à 8

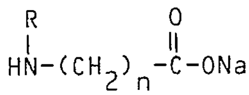

n = 1 à 6, R = alkyle en $C_1$-$C_6$

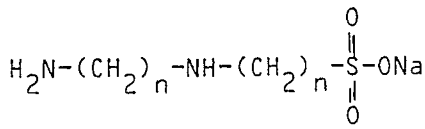

n = 2 à 6

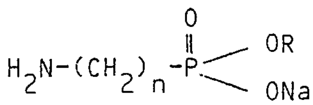

n = 2 à 10, R = alkyle en $C_1$-$C_6$

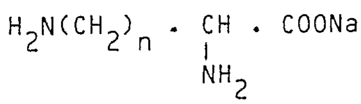

n = 2 à 10

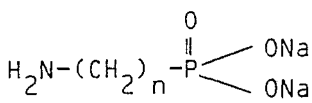

n = 2 à 10

4. Procédé selon la revendication 1 ou 2, caractérisé en ce que l'on utilise en tant que composants A) à la préparation des ionomères de polysiloxanes les composés suivants :

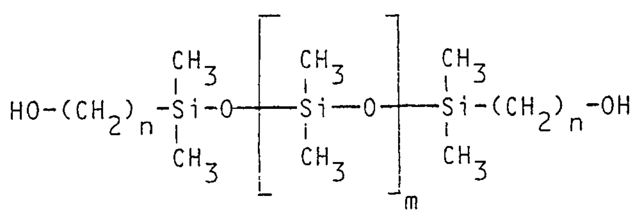

m = 1 à 250

n = 1 à 10

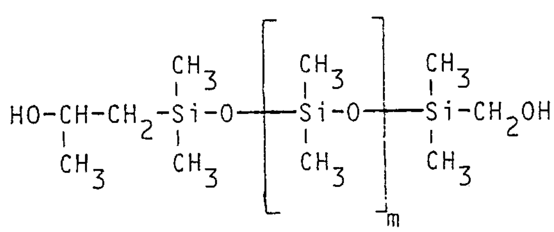

m = 1 à 250

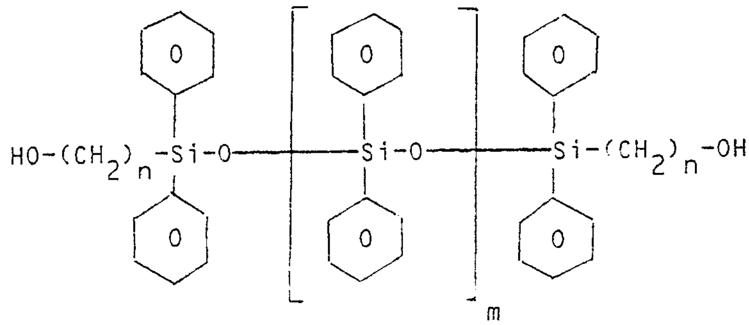

m = 1 à 250

n = 1 à 10

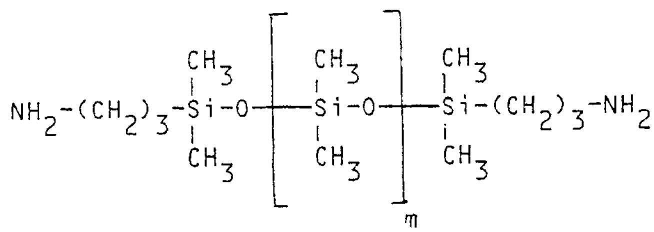

m = 1 à 250

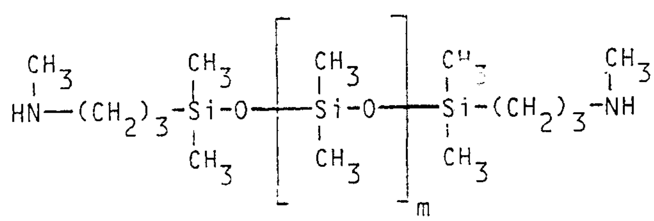

m = 1 à 250

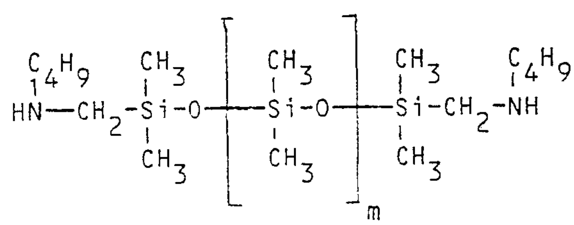

m = 1 à 250

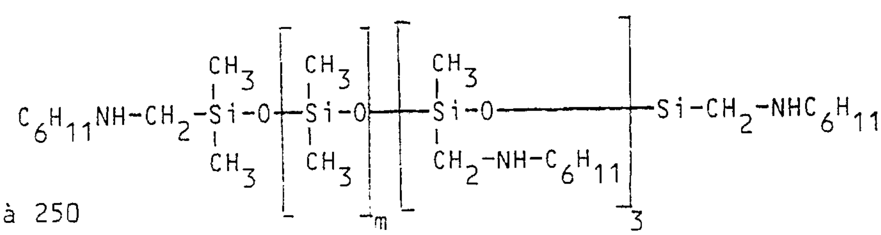

m = 1 à 250

5. Procédé selon l'une des revendications 1 à 4, caractérisé en ce que l'on utilise en tant qu'agents organiques d'allongement des chaînes des diamines aromatiques de poids moléculaire 108 à 399 en quantités de 0,1 à 0,8 % du poids du mélange total.

6. Procédé selon l'une des revendications 1 à 5, caractérisé en ce que l'on utilise en tant que composant α) le 1,5-napthylène-diisocyanate, le 4,4'-diphénylméthane-diisocyanate, le 4,4'-diphényléthane-diisocyanate, le 1,4-phénylène-diisocyanate, le 1,4-cyclohexane-diisocyanate et ou le 3,3'-diméthyl-4,4'-diisocyanatodiphényle.

7. Procédé selon l'une des revendications 1 à 6, caractérisé en ce que l'on utilise en tant que composant $\beta$) des polyesters-polyols, des polypropylène-glycols, des polyoxytétraméthylène-éther-diols, des polycaprolactone-diols et/ou des polycarbonate-diols.